# EUROPÄISCHE PATENTSCHRIFT

(11) **EP 0 415 153 B1**
(45) Veröffentlichungstag und Bekanntmachung des Hinweises auf die Patenterteilung: **23.02.1994**
(21) Anmeldenummer: 90115381.7
(22) Anmeldetag: 09.08.1990
(51) Int. Cl.: B29C 45/14, B29C 45/42

(54) **Einlege- und Entnahmevorrichtung für eine Spritzgussmaschine**
Insertion and take-out apparatus for an injection moulding machine
Dispositif d'insertion et d'enlèvement pour une machine à mouler par injection

(30) Priorität: 30.08.1989 DE 3928680
(43) Veröffentlichungstag der Anmeldung: 06.03.1991
(73) Patentinhaber: SYSTEC ENGINEERING KNAUER GMBH & CO. KG, D-72574 Bad Urach (DE)
(72) Erfinder: Döbler, Walter, D-7432 Bad Urach, Seeburg (DE)
(74) Vertreter: Grünecker, Kinkeldey, Stockmair & Schwanhäusser Anwaltssozietät

(56) Entgegenhaltungen:
- EP-A- 0 398 044
- FR-A- 2 540 034
- FR-A- 2 606 702
- GB-A- 1 172 827
- US-A- 3 899 277
- US-A- 4 795 124
- PATENT ABSTRACTS OF JAPAN vol. 12, no. 142 (M-692)(2989) 30. April 1988 & JP-A-62 264 918 (TOSHIBA CORP. )

## Beschreibung

Die Erfindung bezieht sich auf eine Entnahmevorrichtung für eine Spritzgußmaschine entsprechend den Merkmalen des Patentanspruchs 1.

Eine solche Vorrichtung ist in der älteren europäischen Patentanmeldung EP-A-398 044 beschrieben. Dort ist ein um eine vertikale Achse schwenkbarer Arm vorgesehen, der in den Raum zwischen den beiden geöffneten Werkzeughälften eines Spritzgußwerkzeuges hineingeschwenkt werden kann. An seinem freien Ende weist dieser Arm einen Saughalter auf, mit dem das zu entfernende Werkstück ergriffen werden kann. Die Schwenkbewegung des Armes ist über eine Kurvenbahn gesteuert und erfolgt zwangsweise in Abhängigkeit von der Öffnungs- bzw. Schließbewegung des Spritzgußwerkzeuges.

Eine ähnliche Vorrichtung ist auch aus der US-PS 47 87 841 bekannt.

Es ist Aufgab der vorliegenden Erfindung, eine Entnahmevorrichtung der eingangs genannten Art so weiterzubilden, daß sich auf einfache Weise Kunststoffbecher aus der Spritzgußform entnehmen und abstapeln lassen.

Diese Aufgabe wird durch die Merkmale des Anspruchs 1 gelöst.

Mit der erfindungsgemäßen Vorrichtung ist es nunmehr möglich, die Kunststoffbecher gleichzeitig beim Schwenken der Saughalteschwinge um 90° in eine senkrecht zur Schwenkebene der Saughalteschwinge gerichtete Ebene zu schwenken. In dieser Stellung lassen sich die Becher einfach abstapeln, indem man den Saughalter abschaltet und den Schwenkhebel zurückzieht. Der Becher fällt dann aufgrund der Schwerkraft nach unten.

Weitere vorteilhafte Ausgestaltungen der Erfindung sind Gegenstand der Unteransprüche.

Nachfolgend wird ein Ausführungsbeispiel der erfindungsgemäßen Entnahmevorrichtung anhand der beiliegenden, schematischen Zeichnungen näher erläutert. Es zeigen:
- **Fig. 1**: eine schematische Seitenansicht der Werkzeugteile einer Kunststoff-Spritzgußmaschine;
- **Fig. 2**: eine schematische Draufsicht auf eines der Spritzgußwerkzeuge bei geöffnetem Werkzeug mit einer Einlege- und Entnahmevorrichtung;
- **Fig. 3**: eine Ansicht von unten des in Fig. 2 von oben gezeigten Spritzgußwerkzeuges, ebenfalls bei geöffneter Spritzgußform;
- **Fig. 4**: eine der Fig. 2 entsprechende schematische Draufsicht auf eines der Spritzgußwerkzeuge einer Kunststoff-Spritzgußmaschine mit erfindungsgemäßer Entnahmevorrichtung;
- **Fig. 5**: einen Schnitt durch die geöffnete Spritzgußform entlang der Linie V-V in Fig. 4, und
- **Fig. 6a - c**: Teildarstellungenn des Entnahmeorgans der Entnahmevorrichtung aus Fig. 4 in drei verschiedenen und aufeinanderfolgenden Betriebsstellungen des Organs.

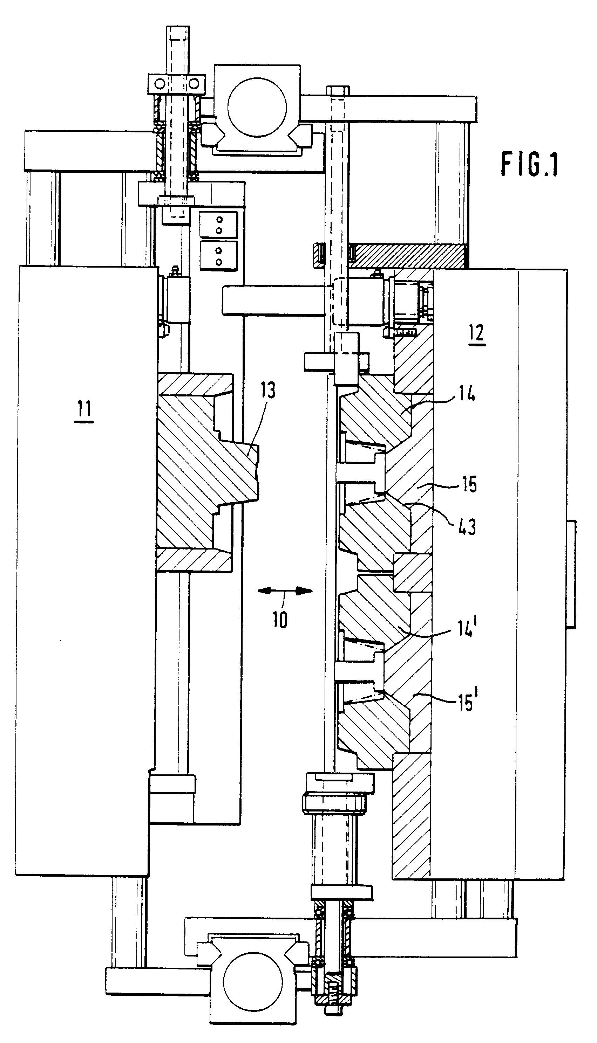

Die Fig. 1 bis 3 zeigen zwei in Richtung des eingezeichneten Doppelpfeiles 10 relativ zueinander verstellbare Werkzeugteile 11 und 12 einer Kunststoff-Spritzgußmaschine. Jedes Werkzeugteil ist mit mindestens einer Formhälfte versehen, die mit einer zweiten Formhälfte auf dem anderen Werkzeugteil zusammenwirkt. So ist das Werkzeugteil 11 mit einer Formpatrize 13 besetzt, die mit einer dazu passenden Formmatrize 14 und einem Formboden 15, die beide auf dem Werkzeugteil 12 angeordnet sind, zusammenwirkt. Die Formpatrize 13 und die Formmatrize 14 mit dem Formboden 15 bilden zusammen eine Spritzgußform für nie Herstellung von Kunststoffbechern. In Fig. 1 ist noch eine zweite gleiche Formmatrize 14' mit Formboden 15' auf den Werkzeugteil 12 dargestellt.

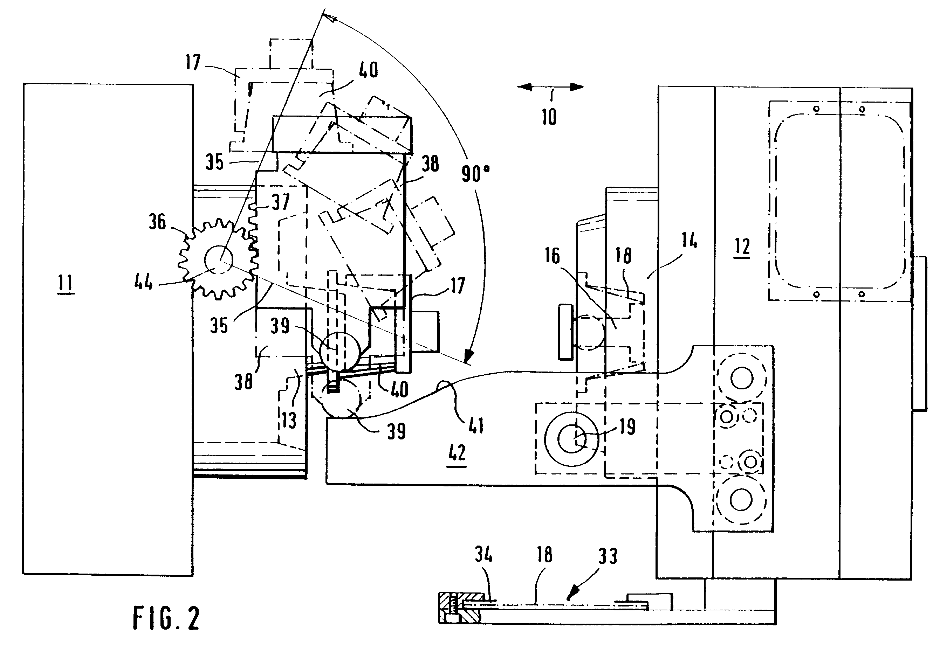

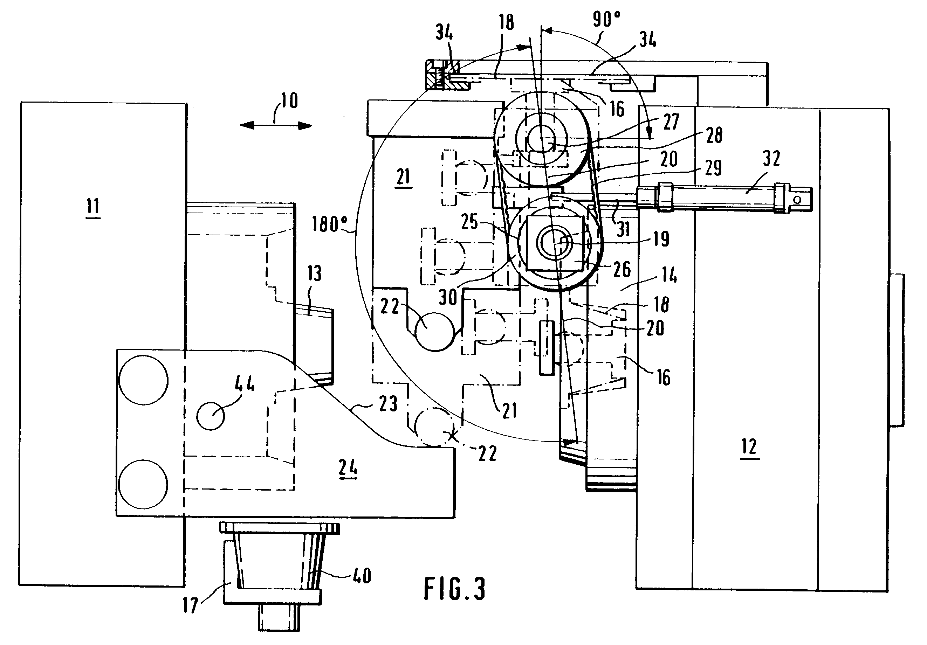

Die Einlege- und Entnahmevorrichtung der Spritzgußmaschine weist für jede Spritzgußform ein gesondertes Einlegeorgan in Form eines Saugstempels 16 und ein gesondertes Entnahmeorgan in Form einer Saughalteschwinge 17 auf, die in den Fig. 2 und 3 dargestellt sind. Der Saugstempel 16 dient zum Einlegen eines bedruckten Hüllfolienabschnittes 18 in die Formmatrize 14 und ist auf einem am Werkzeugteil 12 auf einer Achse 19 verschwenkbar gelagerten und in Fig. 3 nur durch eine Achslinie angedeuteten Schwenkarm 20 angeordnet. Die Schwenkbewegung des Schwenkarmes 20 um 180° wird mittels eines in Fig. 3 dargestellten, in nicht gezeigter Weise ebenfalls am Werkzeugteil 12 gelagerten Schiebers 21 bewirkt, der mit einer Laufrolle 22 gegen eine Steuerkurve 23 anliegt, die an einem mit dem verstellbaren Werkzeugteil 11 fest verbundenen Kurvensteg 24 ausgebildet ist. Am Schieber 21 ist eine Zahnstange 25 ausgebildet, die in Eingriff mit einem auf der Schwenkachse 19 befestigten Zahnrad 26 steht, über welches dem Schwenkarm 20 die Verschwenkbewegung erteilt wird.

Der Saugstempel 16 ist auf dem Schwenkarm 20 um eine Achse 27 drehbar gelagert, auf welcher eine Zahnriemenscheibe 28 befestigt ist. Diese Zahnriemenscheibe ist über einen Zahnriemen 29 mit einer auf der Schwenkachse 19 frei drehbar gelagerten Zahnriemenscheibe 30 antriebsmäßig verbunden. Die Zahnriemenscheibe 30 ist mit der Kolbenstange 31 eines Verstellzylinders 32 gekoppelt, mit dessen Hilfe dem Saugstempel 16 eine zusätzliche Drehbewegung um 90° erteilt wird. Der Saugstempel 16 ist in Fig. 3 in verschiedenen Schwenkstellungen dargestellt und wird durch die Schwenkbewegung des Schwenkarmes 20 zwischen der Formmatrize 14 und einer Ladestelle 33 bewegt, wo eine vorbedruckte Folienbahn 34 zugeleitet wird, von welcher in nicht dargestellter Weise die Hüllfolienabschnitte 18 abgetrennt werden.

Fig. 2 zeigt die Anordnung des als Saughalteschwinge 17 ausgebildeten Entnahmeorganes. Die Saughalteschwinge 17 ist auf dem Werkzeugteil 11 auf einem um eine Achse 44 drehbaren und ebenfalls nur als Achslinie angedeuteten Schwenkarm 35 befestigt. Sie hat eine Winkelform und dient zum Erfassen eines auf der Formpatrize 13 sitzenden, fertig gespritzten Kunststoffbechers 40. In Fig. 2 ist die Saughalteschwinge 17 in verschiedenen Schwenkstellungen eingezeichnet. Der Schwenkarm 35 läßt sich um einen Winkel von 90° verschwenken. Hierzu ist auf der Schwenkachse 44 ein Zahnrad 36 befestigt, das mit einer Zahnleiste 37 in Eingriff steht, die an einem in nicht dargestellter Weise am Werkzeugteil 11 längsverschiebbar gelagerten Schieber 38 ausgebildet ist. Der Schieber 38 ist mit einer Laufrolle 39 in Anlage gegen eine Steuerkurve 41 gehalten, die an einem mit dem Werkzeugteil 12 fest verbundenen Kurvensteg 42 ausgebildet ist.

Während der Auffahrbewegung der beiden Werkzeugteile 11 und 12 werden die beiden Schwenkarme 20 und 35 durch die kurvengesteuerten Schieber 21 und 38 um ihre Drehachsen 19 und 44 bewegt. Beim dargestellten Ausführungsbeispiel sind beide Schieber 21 und 38 Teile eines Druckluftzylinders und stehen unter Druck, der die Schieber 21 und 38 mit ihrer Laufrolle 22 und 39 immer in Anlage gegen die Steuerkurve 23 oder 41 halt. Während des Öffnens der Form bis in die aus den Fig. 2 und 3 ersichtliche volle Öffnungsstellung wird der Saugstempel 16 mit einem an der Ladestelle 33 erfaßten Hüllfolienabschnitt einwärts bis in die Formmatrize 14 bewegt. Dort wird der Hüllfolienabschnitt 18 vom Saugstempel 16 freigegeben und mittels einer nicht dargestellten Saugeinrichtung des Werkzeugteiles 12, die in dem zwischen der Formmatrize 14 und dem Formboden 15 befindlichen Spalt 43 (Fig. 1) wirksam wird, in der Formmatrize 14 gehalten. Gleichzeitig ist mit dem Schwenkarm 35 die Saughalteschwinge 17 bis zur Formpatrize 13 einwärts verschwenkt worden, wo sie den noch auf der Formpatrize 13 sitzenden gespritzten Kunststoffbecher 40 erfaßt. Bei der Schließbewegung der Form, bei welcher die beiden Werkzeugteile 11 und 12 gegeneinander bewegt werden, werden der Saugstempel 16 und die Saughalteschwinge 17 wieder nach außen zurückverschwenkt, wobei die Saughalteschwinge 17 den Kunststoffbecher 40 in eine äußere Abwurfstellung bringt.

Sowohl der Saugstempel 16 als auch die Saughalteschwinge 17 können in nicht dargestellter Weise mit Sensoren einer Steuer- und Überwachungseinrichtung der Kunststoff-Spritzgußmaschine besetzt sein, die feststellen, ob die beiden Organe ordnungsgemäß mit Werkstücken belegt sind oder nicht.

Es versteht sich, daß die Verschwenkbereiche der Schwenkarme 20 und 35 und auch der Drehwinkel des Saugstempels auf andere passende Werte eingestellt sein können.

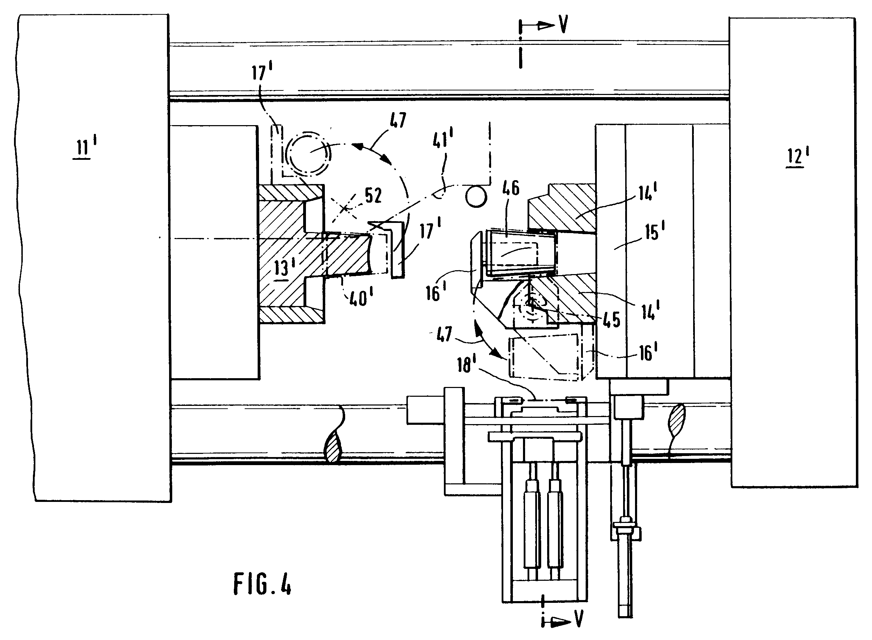

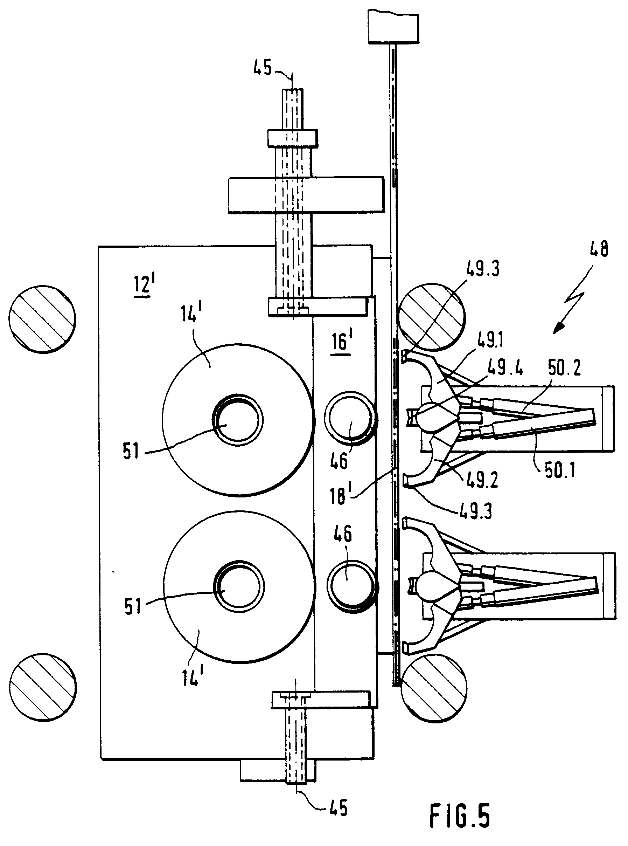

Die Fig. 4 bis 6 zeigen die relativ zueinander verstellbaren Werkzeugteile 11' und 12' einer Kunststoff-Spritzgußmaschine, bei welcher das Einlegeorgan und das Entnahmeorgan anders als bei dem Ausführungsbeispiel nach den Fig. 1 bis 3 gestaltet sind. In den Zeichnungen sind vergleichbare Vorrichtungsteile mit den gleichen Bezugsziffern wie in den Fig. 1 bis 3, ergänzt durch einen Indexstrich, bezeichnet. Auch hier bilden eine Formpatrize 13' und eine Formmatrize 14' mit dem Formboden 15' zusammen eine Spritzgußform für die Herstellung von konischen Kunststoffbechern. In Fig. 5 ist noch eine zweite gleiche Formmatrize 14' auf dem Werkzeugteil 12' dargestellt.

Das Einlegeorgan 16' hat die Form einer um eine Achse 45 verschwenkbaren Platte, auf welcher für jede Formmatrize 14' ein konischer Saughaltedorn 46 angeordnet ist. Die Schwenkbewegung der Platte 16' des Einlegeorganes wird wieder mittels starr mit einem der Formteile verbundenen Steuerkurven bewirkt, auf deren Darstellung in der Zeichnung verzichtet worden ist. In Fig. 4 ist lediglich eine Steuerkurve 41' für das als Saughalteschwinge 17' ausgebildete Entnahmeorgan angedeutet. Einlegeorgan 16' und Entnahmeorgan 17' sind in Fig. 4 in ihrer inneren Endstellung mit voll ausgezogenen Strichen eingezeichnet. Ihre äußere Endstellung ist mit strichpunktierten Linien, und ihr Schwenkbereich ist durch einen Kreisbogen und jeweils einen Doppelpfeil 47 eingetragen.

Der Einlege- und Entnahmevorrichtung ist eine Beladevorrichtung 48 für die Saughaltedorne 46 zugeordnet. Die Beladevorrichtung 48 weist für jeden Saughaltedorn 46 eine Greifvorrichtung mit zwei um eine gemeinsame Achse verschwenkbaren Greifarmen 49.1 und 49.2 auf. Die freien Enden 49.3 der verschwenkbaren Greifarme sind als Saughaltestellen für die anzulegenden bedruckten Hüllfolienabschnitte 18' ausgebildet, die zuerst mit einem zentralen Drucksteg 49.4 des Greifers 49 gegen den Saughaltedorn zur Anlage gebracht werden, bevor sie mittels der einzeln mittels pneumatischer Kolben/Zylinder-Anordnungen 50.1 und 50.2 bewegten Greifarme 49.1 und 49.2 um den konischen Saughaltedorn 46 herumgelegt werden. Die verwendete Greiferkonstruktion erlaubt ein sehr lagegenaues Anlegen der bedruckten Hüllfolienabschnitte 18', die mittels der Saughaltedorne 46 auch entsprechend lagegenau in die konische Öffnung 51 der Formmatrize 14' eingebracht werden.

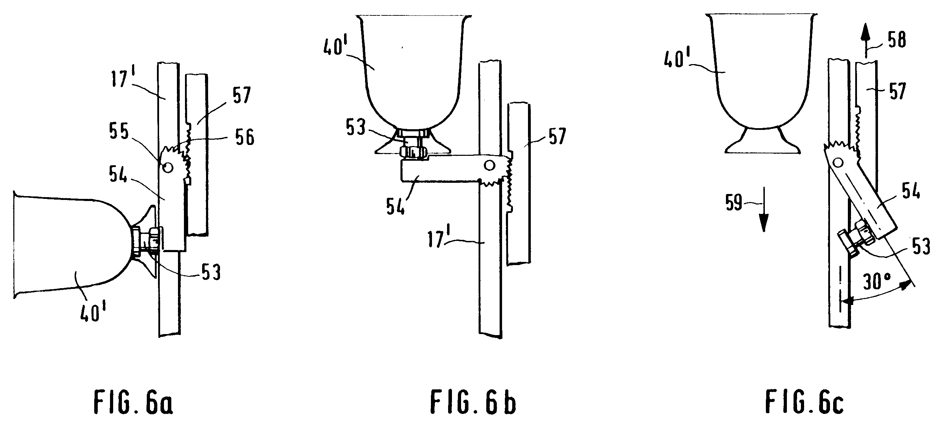

Das Entnahmeorgan in Form einer Saughalteschwinge 17', die um eine in Fig. 4 eingezeichnete Drehachse 52 verschwenkbar gelagert ist und deren Schwenkbewegung durch die Steuerkurve 41' erzielt wird, erbringt bei der Entnahme eines fertiggespritzten und mit dem Hüllfolienabschnitt versehenen Kunststoffbechers 40' ein Drehen des Bechers um 90° in einer senkrecht zur Schwenkebene gerichteten Ebene. Hierzu ist gemäß den Fig. 6 der den Kunststoffbecher 40' an seinem Fußteil zentral erfassende Saughalter 53 am Ende eines Schwenkhebels 54 angeordnet, der mit seinem anderen Ende um eine Achse 55 in der Saughalteschwinge 17' verschwenkbar gelagert ist. Der Schwenkhebel 54 ist mit einem koaxialen Zahnkranz 56 versehen, der mit einer relativ zur Saughalteschwinge 17' beweglichen Zahnstange 57 in Eingriff steht. Die Zahnstange 57 ist in nicht dargestellter Weise mit den Schwenkmechanismus der Saughalteschwinge 17' mechanisch so gekoppelt, daß ihre Relativbewegung gegenüber der Saughalteschwinge 17' in Abhängigkeit von deren Schwenklage und so erfolgt, daß in der in Fig. 6a dargestellten inneren Schwenklage der Saughalteschwinge 17' der Schwenkhebel 54 in die Richtung der Saughalteschwinge 17' ausgerichtet ist, in der in Fig. 6b ersichtlichen äußeren Endstellung jedoch eine Lage senkrecht zur Saughalteschwinge 17' einnimmt. In dieser Stellung wird dann der Unterdruck am Saughalter 53 abgeschaltet und der Schwenkhebel 54 durch eine Rückverstellung der Zahnstange 57 in Richtung des Pfeiles 58 in die aus Fig. 6c ersichtliche Stellung zurückgezogen. Dadurch kann der freigegebene Kunststoffbecher 40' in einer stapelgerechten Lage in Richtung des Pfeiles 59 in einen Stapelschacht abfallen.

Auch bei der Ausführungsform der Einlege- und Entnahmevorrichtung nach den Fig. 4 bis 6 können das Einlegeorgan und das Entnahmeorgan in nicht dargestellter Weise mit Sensoren einer Steuer- und Überwachungseinrichtung der Kunststoff-Spritzgußmaschine besetzt sein, mit deren Hilfe feststellbar ist, ob die beiden Organe ordnungsgemäß mit Werkstücken belegt sind oder nicht.

## Patentansprüche

1. Entnahmevorrichtung zum Entnehmen eines Werkstücks aus einer offenen Form einer Spritzgußmaschine mit zwei relativ zueinander bewegbaren Formhälften, mit einer um eine erste Drehachse (52) schwenkbaren Saughalteschwinge (17') und einer Einrichtung (36, 37, 38, 39, 41) zum zwangsgekoppelten Schwenken der Saughalteschwinge (17') um die Achse (52) in den und aus dem Raum zwischen den beiden Formhälften, gleichzeitig mit deren Öffnungs- und Schließbewegung, **dadurch gekennzeichnet**, daß an der Saughalteschwinge (17') ein um eine horizontale Achse (55) schwenkbarer Schwenkhebel (54) angeordnet ist, der an seinem freien Ende einen Saughalter (53) zum Erfassen des Werkstücks aufweist, wobei der Schwenkhebel (54) zum Drehen des Werkstücks um ca. 90° in eine senkrecht zur Schwenkebene der Saughalteschwinge (17') gerichtete Ebene mit einer Schwenkeinrichtung (56, 57) verbunden ist.

2. Entnahmevorrichtung nach Anspruch 1, **dadurch gekennzeichnet**, daß die Schwenkeinrichtung für den Schwenkhebel (54) eine relativ zur Saughalteschwinge (17') bewegbare Zahnstange (57) und ein an dem Schwenkhebel vorgesehenes Ritzel (56) aufweist, welches in die Zahnstange (57) eingreift.

3. Entnahmevorrichtung nach Anspruch 1 oder 2, **dadurch gekennzeichnet**, daß die Zahnstange (57) mit dem Schwenkmechanismus (36, 37, 38, 39, 41) der Saughalteschwinge (17') mechanisch derart gekoppelt ist, daß die Relativbewegung der Zahnstange (57) in Abhängigkeit von der Schwenklage der Saughalteschwinge (17') erfolgt.

## Claims

1. Removal apparatus for removing a workpiece from an open mould of an injection-moulding machine having two mould halves which can move in relation to each other, having a suction holding rocker (17') which can swivel about a first axis of rotation (52) and having a device (36, 37, 38, 39, 41) for the positively coupled swivelling of the suction holding rocker (17') about the axis (52) into and out of the space between the two mould halves, simultaneously with their opening and closing movement, characterized in that on the suction holding rocker (17') there is arranged a swivel lever (54), which can swivel about a horizontal axis (55) and has at its free end a suction holder (53) for seizing the workpiece, the swivel lever (54) being connected to a swivelling device (56, 57) for turning the workpiece through about 90° into a plane directed perpendicularly with respect to the swivelling plane of the suction holding rocker (17').

2. Removal apparatus according to Claim 1, characterized in that the swivelling device for the swivel lever (54) has a toothed rack (57), which can move in relation to the suction holding rocker (17'), and a pinion (56), which is provided on the swivel lever and engages in the toothed rack (57).

3. Removal apparatus according to Claim 1 or 2, characterized in that the toothed rack (57) is mechanically coupled to the swivelling mechanism (36, 37, 38, 39, 41) of the suction holding rocker (17') in such a way that the relative movement of the toothed rack (57) takes place in dependence on the swivelling position of the suction holding rocker (17').

## Revendications

1. Dispositif de prélèvement, pour prélever une pièce façonnée hors d'un moule ouvert d'une machine à mouler par injection ayant deux demi-moules déplaçables l'un par rapport à l'autre, un balancier support aspirant (17') susceptible de pivoter autour d'un premier axe de rotation (52), et un dispositif (36, 37, 38, 39, 41), servant à faire pivoter avec un couplage forcé le balancier support aspirant (17') autour de l'axe (52), en entrant et en sortant de l'espace défini entre les deux demi-moules, simultanément à leur mouvement d'ouverture et de fermeture, caractérisé en ce que sur le balancier support aspirant (17') est disposé un levier pivotant (54), susceptible de pivoter autour d'un axe (55) horizontal et présentant à son extrémité libre un préhenseur aspirant (53) pour saisir la pièce façonnée, le levier pivotant (54) étant relié à un dispositif de pivotement (56, 57), pour produire une rotation de la pièce façonnée d'à peu près 90° dans un plan perpendiculaire au plan de pivotement du balancier support aspirant (17').

2. Dispositif de prélèvement selon la revendication 1, caractérisé en ce que le dispositif de pivotement du levier pivotant (54) présente une crémaillère (57), déplaçable par rapport au balancier support aspirant (17'), et un pignon (56) prévu sur le levier pivotant et s'engrenant avec la crémaillère (57).

3. Dispositif de prélèvement seion la revendication 1 ou 2, caractérisé en ce que la crémaillère (57) est couplée mécaniquement au mécanisme de pivotement (36, 37, 38, 39, 41) du balancier support aspirant (17'), de manière que le mouvement relatif de la crémaillère (57) s'effectue en fonction de la position de pivotement du balancier support aspirant (17').
